# EUROPEAN PATENT SPECIFICATION

(11) **EP 2 677 286 B1**
(45) Date of publication and mention of the grant of the patent: **18.05.2016**
(21) Application number: 13158144.9
(22) Date of filing: 07.03.2013
(51) Int. Cl.: G01G 19/44, G01G 19/50

(54) **Biometric apparatus**
Biometrische Vorrichtung
Appareil biométrique

(30) Priority: 21.06.2012 JP 2012139724
(43) Date of publication of application: 25.12.2013
(73) Proprietor: Tanita Corporation, Tokyo 174-8630 (JP)
(72) Inventor: Suzuki, Shun, Itabashi-ku, Tokyo 174-8630 (JP)
(74) Representative: Grünecker Patent- und Rechtsanwälte PartG mbB

(56) References cited:
- EP-A2- 1 371 954
- DE-A1- 3 815 626
- DE-U1- 20 316 286

## Description

The present invention relates to a biometric apparatus configured to measure biometric information including weight or biometric impedance of a user.

### 2. Description of the Related art

EP 1 371 954 A2 relates to a weighing scale having a support plate for holding a mass to be weighed and an electrical switching arrangement for switching the scale on or off. DE 203 16 286 U1 relates to a precision balance having a contactless switch for detecting the position of a finger or object using infrared or light beam reflected from a transmitter. DE 38 15 626 A1 relates to an electronic weighing machine.

In a biometric apparatus, there is a configuration provided with an automatic off function which converts the state of the apparatus from a state in use to a state not in use in order to reduce a waste of electric current, by turning off a power source or reducing electric power to a minimum electric power required for maintaining only predetermined sensors in a driven state automatically when there is no input operation. In the biometric apparatus disclosed in JP-A-2001-204704, a reference time for determining the automatic off operation is set in advance, and the power source of the apparatus is automatically turned off when a state in which no measurement and operation occurs continues for a period equal to or longer than the reference time.

There is proposed also a biometric apparatus of a so-called step-on type provided with a function to turn on the power source of the apparatus to convert the state of the apparatus to the state in use which allows measurement of biometric information automatically when the fact that a load is applied in the biometric apparatus in the state not in use is sensed. For example, there are a configuration in which the apparatus is converted from the state not in use to the state in use by turning on of a mechanical switch mechanism by a load applied when a user gets on (see JP-A-62-126318) and a configuration in which the apparatus is converted from the state not in use to the state in use when an output, which corresponds to the fact that the user gets thereon, is detected from among outputs acquired from a load cell at short time intervals by continuously monitoring the outputs. In particular, in the biometric apparatus of this type, a zero-point update process that sets an output value of the load cell at the time when no load is applied as a zero-point is intermittently executed while the apparatus is in the state not in use.

However, according to the automatic off function of the biometric apparatus of the related art, the apparatus is forcedly converted to the state not in use when a certain reference time (for example, 60 seconds) or more has elapsed in a non-operating state even though there is actually a user using the biometric apparatus. Therefore, in a scene of performing initial setting of the biometric apparatus, for example, the initial setting mode is cancelled and the apparatus is converted to the state not in use only by the elapse of reference time even though the user, who is not used to operate the apparatus (for example, an aged user), is still in setting operation while having a problem in setting operation or reading a manual. In such a case, the user is obliged to press an activation switch again and restart the initial setting from the beginning inconveniently.

A step-on type biometric apparatus may erroneously sense that a load of a user is applied to the biometric apparatus due to the influence of radio wave noise or the like. In other words, the apparatus in the state not in use is converted to the state in use due to the erroneous sensing as described above even through nobody is thereon and, consequently, an electric power may uselessly be consumed.

In the step-on type biometric apparatus, a zero-point update process of the load cell when the apparatus is not in use is performed intermittently (for example, every hour). However, depending on the length of the update intervals, the actual zero point may be changed due to any event which may occur during a period from a latest time point when the zero-point is updated to a time point when the user gets on the biometric apparatus and the apparatus is converted to the state in use. In other words, the zero-point update process of the load cell is preferably performed immediately before the user gets on the biometric apparatus.

In addition, in the step-on type biometric apparatus, the zero-point update process of the load cell needs to be performed intermittently at predetermined time intervals, and an electric power required for the zero-point update process is consumed each time.

### SUMMARY

Accordingly, it is an object of the invention to provide a biometric apparatus which is capable of controlling an operating state in accordance with a result of determination whether or not a user is present near the apparatus, being convenient, and being capable of reducing power consumption. In particular, it is an object of the invention to provide a convenient biometric apparatus configured not to convert to a state not in use when the user is present near the apparatus. The invention also intends to provide a biometric apparatus configured to convert the state of the apparatus from the state not in use to a state in use automatically when a person as a user (hereinafter, referred to simply as "user") gets close to the apparatus, and reduce the power consumption by preventing the automatic conversion to the state in use even though there is no user. It is another object of the invention to provide a biometric apparatus configured to perform a zero-point update process of a load cell immediately before the user gets on the biometric apparatus to improve the accuracy of measurement and reduce the power consumption for the zero-point update process of the load cell.

In order to solve the above described problem, there is provided a biometric apparatus configured to measure biometric information of a user according to claim 1.

Preferably, in a case where the operating state of the biometric apparatus is a state in use, the control of the operating state by the controller is to convert the biometric apparatus from the state in use to a state not in use after the controller determines that the user is not in proximity to the biometric apparatus.

Preferably, in a case where the operating state of the biometric apparatus is the state in use, the control of the operating state by the controller is to restrict the conversion of the biometric apparatus from the state in use to the state not in use while the controller determines that the user is in proximity to the biometric apparatus and convert the biometric apparatus from the state in use to the state not in use after the controller determines that the user is not in proximity to the biometric apparatus.

Preferably, in a case where the operating state of the biometric apparatus is the state in use, the control of the operating state by the controller is to convert the biometric apparatus from the state in use to the state not in use after the controller determines that the user is not in proximity to the biometric apparatus for a predetermined time or longer by the controller.

Preferably, the state in use includes at least one of a state in a setting process of the biometric apparatus by the user, a state of waiting measurement of the biometric information of the user by the biometric information measuring unit, a state in a process of measuring the biometric information of the user by the biometric information measuring unit, and a state of displaying a result of measurement of the biometric information.

Preferably, in a case where the operating state of the biometric apparatus is a state not in use, the control of the operating state by the controller is to convert the biometric apparatus from the state not in use to a state in use when the controller determines that the user is in proximity to the biometric apparatus.

Preferably, the biometric information measuring unit includes a load cell outputting a load signal as a zero-point according to a load applied to the biometric apparatus, and the controller sets the load signal acquired from the load cell when the controller determines that the user is in proximity to the biometric apparatus.

Preferably, the biometric information measuring unit includes a load cell outputting a load signal according to a load applied to the biometric apparatus, and in a case where the operating state of the biometric apparatus is a state not in use, the control of the operating state by the controller is to convert the biometric apparatus from the state not in use to a state in use when the controller determines that the user is in proximity to the biometric apparatus and when the controller senses the fact that the user gets on the biometric apparatus on the basis of the load signal acquired from the load cell.

Preferably, the controller repeats a process of acquiring the sensor signal from the sensor when an elapsed time for sensor measurement T1 measured by a time counting unit reaches or exceeds a sensor measuring time to determine the proximity of the user to the biometric apparatus.

Preferably, the controller repeats a process of acquiring the load signal from the load cell to sense whether or not the user gets on the biometric apparatus is repeated when an elapsed time for load sensing measured by a time counting unit reaches or exceeds a load sensing time.

Preferably, when an elapsed time for sensor measurement T1 measured by a time counting unit reaches or exceeds a sensor measuring time before an elapsed time for load sensing measured by the time counting unit reaches or exceeds a load sensing time, the controller acquires the sensor signal from the sensor, determines the proximity of the user to the biometric apparatus, acquires and the load signal form the load cell, and senses whether or not the user gets on the biometric apparatus,
when the elapsed time for load sensing measured by the time counting unit reaches or exceeds the load sensing time before the elapsed time for sensor measurement T1 measured by the time counting unit reaches or exceeds the sensor measuring time, the controller acquires the load signal from the load cell and senses whether or not the user gets on the biometric apparatus, and then acquires the sensor signal from the sensor to determine the proximity of the user to the biometric apparatus.

Preferably, the sensor is an infrared ray sensor capable of detecting an infrared ray and outputting a sensor signal, and
the controller determines that the user is in proximity to the biometric apparatus when the sensor signal from the infrared ray sensor is larger than a predetermined threshold value.

Preferably, the sensor is an illuminance sensor and the controller determines that the user is in proximity to the biometric apparatus when the difference between the sensor signal acquired from the illuminance sensor at the time of determination of proximity of this time and the sensor signal acquired from the illuminance sensor at the time of determination of proximity of the previous time is larger than the predetermined threshold value.
(1) A controller configured to determine the proximity of the user to the biometric apparatus, and control the operating state of the biometric apparatus on the basis of the result of determination is provided. Therefore, terminating the operation of the biometric apparatus even though the user is still present, or starting the operation of the biometric apparatus even though the user is not present may be prevented, so that a convenient biometric apparatus which is capable of reducing the power consumption may be provided.
(2) In particular, in a state in which the operating state of the biometric apparatus is in the state in use, the operating state is controlled so that the biometric apparatus is converted from the state in use to the state not in use after having determined that the user is not in proximity to the biometric apparatus. Therefore, since inconvenience caused by the current operating state being changed only because of elapse of reference time even thought the user is still in use as in the biometric apparatus of the related art is prevented, and the state is changed into the state not in use after having determined that there is no user, a biometric apparatus also capable of reducing the power consumption is provided.
(3) In a state in which the operating state of the biometric apparatus is in the state not in use, the operating state is controlled so that the biometric apparatus is converted from the state not in use to the state in use when the controller determines that the user is in proximity to the biometric apparatus. In other words, useless power consumption caused by conversion of the biometric apparatus in the state not in use to the state in use due to the erroneous sensing as if a load of a user is applied by the influence of the radio wave noise or the like as in the case of the so-called step-on type biometric apparatus of the related art is prevented by depending on the proximity of the user.
(4) Since the user sets a load signal acquired from the load cell as a zero-point when the controller determines that the user is in proximity to the biometric apparatus, the zero-point update process is executed immediately before measuring the weight, and hence the accuracy of the measurement is expected and also the necessity to perform the zero-point update process of the load cell is eliminated intermittently during the state not in use as it is in the case of the biometric apparatus of the related art, so that reduction of the power consumption is achieved.
(5) In a state in which the operating state of the biometric apparatus is in the state not in use, the operating state is controlled so that the biometric apparatus is converted from the state not in use to the state in use when the controller determines that the user is in proximity to the biometric apparatus and the fact that the user gets on the biometric apparatus is sensed. Since the biometric apparatus is converted to the state in use only when the fact that the user gets on the biometric apparatus is determined with high degree of accuracy, and it can be said that the user really gets on the biometric apparatus, conversion to the state in use due to the erroneous sensing is prevented, and the power consumption may be reduced.

### BRIEF DESCRIPTION OF THE PREFERRED EMBODIMENT

FIG. 1 is a perspective view illustrating an appearance configuration of a biometric apparatus according to a first embodiment of the invention;
FIG. 2 is a block diagram illustrating a configuration of the biometric apparatus according to the first embodiment of the invention;
FIG. 3 is a flowchart illustrating a flow of weight measurement by the biometric apparatus according to the first embodiment of the invention;
FIG. 4 is a flowchart illustrating a flow of a process of a setting mode of the biometric apparatus according to the first embodiment of the invention;
FIG. 5 is a flowchart illustrating a flow of a measurement of biometric impedance by the biometric apparatus according to the first embodiment of the invention;
FIG. 6 is a flowchart illustrating a flow of display of a result of measurement by the biometric apparatus according to the first embodiment of the invention;
FIG. 7 is a flowchart illustrating a flow of a process when a biometric apparatus is in a state not in use according to a second embodiment of the invention;
FIG. 8A is a flowchart illustrating a flow of a process when a biometric apparatus is in the state not in use according to a third embodiment of the invention; and
FIG. 8B is a flowchart illustrating a flow of a process when a biometric apparatus is in the state not in use according to a third embodiment of the invention.

### DESCRIPTION OF PREFERRED EMBODIMENT

### First Embodiment

Referring now to the drawings, a biometric apparatus according to a first embodiment of the invention will be described in detail. In the first embodiment, an example in which the invention is applied to a weighting machine (a weighting machine with body fat scale) capable of measuring body fat will be described.

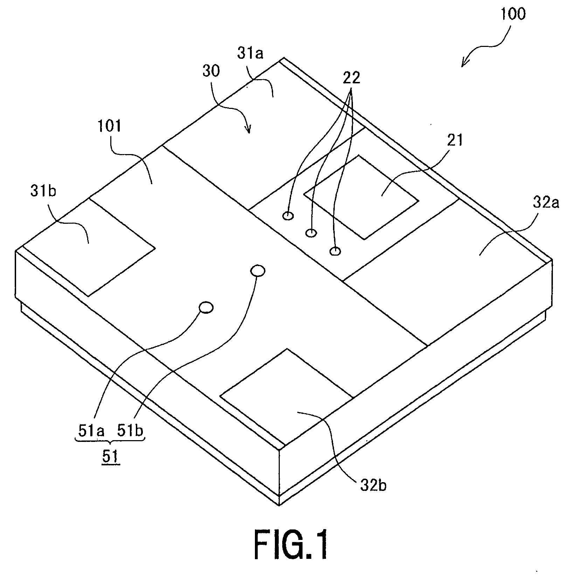

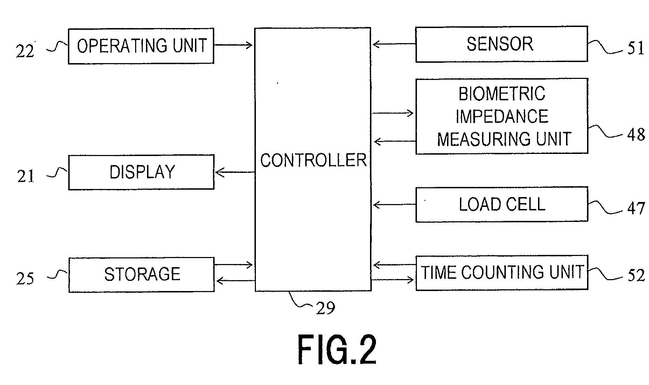

FIG. 1 is a perspective view illustrating an appearance configuration of the biometric apparatus according to the first embodiment of the invention, and FIG. 2 is a block diagram illustrating a configuration of the biometric apparatus according to the first embodiment of the invention.

As illustrated in FIG. 1 and FIG. 2, a weighing machine 100 includes a biometric impedance measuring unit 48 having an electrode member 30 (electrodes 31a and 32a for power distribution and electrodes 31b and 32b for measurement), a load cell 47 as a weight measuring unit, a display 21, an operating unit 22, a storage 25, a controller 29, a sensor 51, a time counting unit 52, and a power source (not illustrated) configured to supply an electric power.

The biometric impedance measuring unit 48, the load cell 47, and the controller 29 function as a biometric information measuring unit configured to measure biometric information of a user.

Here, the biometric information of the user includes (1) weight and biometric impedance acquired by directly measuring the user by the biometric information measuring unit (2) age, sex, and height and the like acquired by the user operating the operating unit 22 and inputting entries, and (3) the fat percentage, the visceral fat level, the muscle mass, the amount of basal metabolism, the bone mass, the body moisture percentage, the BMI (Body Mass Index), the lean body mass, the intercellular fluid volume, and the extracellular fluid volume acquired by calculating the biometric information by applying a predetermined regression formula thereto.

The load cell 47 includes a flexure element, which is a metallic member, deformed according to the load and a strain gauge stuck to the flexure element. When the user rides on the weighing machine 100, the flexure element of the load cell 47 is deflected by the load of the user, and hence the gauge is expanded and contracted, so that the value of resistance (output value) of the strain gauge varies according to the expansion and contraction thereof. The controller 29 obtains the weight from the difference between an output value from the load cell 47 when no load is applied (zero point) and an output value when a load is applied by calculation, so that the weight of the user is measured. A configuration relating to the measurement of the weight using the load cell 47 may be the same as the configuration of general weighing machines.

The biometric impedance measuring unit 48 includes the electrode members 30 including the electrodes 31a and 32a for power distribution and the electrodes 31b and 32b for measurement configured to come into contact with the user, a constant current supply unit (not illustrated) connected to the electrodes 31a and 32a for power distribution and configured to supply a high frequency weak constant current, and a voltage measuring unit (not illustrated) connected to the electrodes 31b and 32b for measurement and configured to measure the potential difference of the living body.

As illustrated in FIG. 1, the thin-plate shaped four electrode members 30 (the electrodes 31a and 32a for power distribution and the electrodes 31b and 32b for measurement) may be arranged on an upper surface 101 of the weighing machine 100 so as to be apart from each other, and provided at positions where the bottoms of the left and right feet come into contact with configured as electrodes for feet when the user gets on the weighing machine 100. Accordingly, when the user gets on the weighing machine 100, the electrode 31a for power distribution and the electrode 31b for measurement come into contact with the bottom of one foot, and the electrode 32a for power distribution and the electrode 32b for measurement come into contact with the bottom of the other foot. Another four electrode members may be provided on a handle member that the user holds with his or her hands to allow measurement of the biometric impedance with eight of the electrodes in total. The electrodes 31a and 32a for power distribution are connected to the constant current supply unit and are electrodes for supplying an electric current for measuring biometric impedance along a route from one foot of the user coming into contact with the electrode 31a for power distribution through the body of the user to the other foot of the user coming into contact with the electrode 32a for power distribution (or the route in the opposite direction). Alternatively, the electrodes 31b and 32b for measurement are connected to the voltage measuring unit, and are electrodes for measuring the voltage between one foot of the user coming into contact with the electrode 31b for measurement and the other foot of the user coming into contact with the electrode 32b for measurement when the electric current is supplied.

An AC current supplied from the constant current supply unit is supplied into the body of the user via the electrodes 31a and 32a for power distribution, so that the voltage is measured by the voltage measuring unit via the electrodes 31b and 32b for measurement. The controller 29 is configured to be capable of measuring the biometric impedance of the user on the basis of the respective values of the electric current and the voltages as described above. In addition, the controller 29 is configured to calculate the fat percentage, the visceral fat by applying the biometric impedance measured in this manner or the biometric information such as weight, age, sex, and height and the like to the predetermined regression formula. A configuration relating to the measurement of the biometric impedance may be the same as the configuration of general body fat scales or body composition meters.

The storage 25 is a storing unit made up of a non-volatile memory and/or a volatile memory using, for example, a semiconductor element. The storage 25 stores results of processing performed by the controller 29 and a variety of types of data for processing thereby in addition to the biometric information of the user.

As the power source, batteries for supplying an electric power to operate the weighing machine 100 or an external power source may be used.

As illustrated in FIG. 1, the display 21, the operating unit 22, and the sensor 51 are provided on the upper surface 101 of the weighing machine 100 in addition to the electrode members 30. The display 21 is principally a portion on which the biometric information is displayed, a unit using liquid crystal, for example, such as a full-dot LCD (Liquid Crystal Display) may be employed.

The operating unit 22 is an input unit and functions as input operation keys for inputting biometric information such as height, sex, and age, a start key for activating the weighing machine 100, and a setting key for activating a setting mode which is a mode for performing an initial setting of the weighing machine 100. It is also possible to provide one or more foot key or keys (not illustrated) configured to be easy-to-operate by a toe on the side surface portion of the weighing machine 100 and make the foot key or keys to function as an input operation key, a start key, or a setting key. The types of the operating unit 22 which may be employed include, for example, a button-type, a touch sensor type, and a dial type.

The time counting unit 52 is configured to be operated under the control of the controller 29 and count time according to an instruction signal from the controller 29. The time counting unit 52 counts specifically a predetermined time or an elapsed time described later (elapsed time for sensor measurement, elapsed time for load sensing). The result of counting is output to the controller 29.

The sensor 51 is configured to be capable of outputting sensor signals according to the proximity of the user to the weighing machine 100 (the biometric apparatus). Here, the proximity of the user to the weighing machine 100 means that the user is present within a predetermined range around the weighing machine 100, and the user is on the upper surface 101 of the weighing machine 100. A sensor capable of outputting sensor signals according to the proximity of the user to the weighing machine 100 is preferable and a case where an infrared ray sensor is used as the sensor 51 will be described in conjunction with FIG. 1 and FIG. 2. However, for example, an ultrasonic wave type sensor using ultrasonic wave is also applicable and the type of the sensor is not limited specifically. Since the luminance on the upper surface 101 of the weighing machine 100 is different between when the user gets closer to the weighing machine 100 and when the user moves away from the weighing machine 100, an illuminance sensor capable of outputting sensor signals in accordance with the illuminance may also be used as the sensor 51. In this embodiment, a configuration in which the controller 29 determines the proximity of the user on the basis of the sensor signals from the sensor 51 will be described. However, it is needless to say that a human-sensitive sensor capable of determining the proximity of a person may be used.

The sensor 51 includes an irradiating unit 51a configured to radiate infrared ray and a light-receiving unit 51b configured to receive the reflected infrared ray as an example as illustrated in FIG. 1. The irradiating unit 51a radiates the predetermined amount of infrared ray to a predetermined range in accordance with the instruction signal from the controller 29. The light-receiving unit 51b detects the infrared ray reflected from substances around the weighing machine 100 and outputs the electric signal (sensor signal) in accordance with the detected infrared ray to the controller 29. The controller 29 determines the proximity of the user to the weighing machine 100 on the basis of the sensor signal from the light-receiving unit 51b. For example, when the sensor signal is larger than a predetermined threshold value from the light-receiving unit 51b, the controller 29 determines that the user is in proximity to the weighing machine 100. Also, the controller 29 may be configured to determine that the user is in proximity to the weighing machine 100 when the difference between the output values of a sensor signal acquired from the light-receiving unit 51b at the determination of this time, and a sensor signal acquired from the light-receiving unit 51b at the time of previous determination is larger than a predetermined threshold value. The measuring technique is not specifically limited.

The range sensed by the sensor 51 may be set as needed depending on the position of installation of the irradiating unit 51a and the light-receiving unit 51b, the angular range and the strength of the infrared ray radiated by the irradiating unit 51a and other conditions so that the sensor 51 is allowed to output the sensor signal with high response in accordance with the proximity of the user to the weighing machine 100. The irradiating unit and the light-receiving unit may be provided two or more or do not have to be the same number. Also, the infrared ray sensor does not necessarily have to be the infrared ray sensor provided with the irradiating unit, and the infrared ray that the user emits as thermal energy may be detected by an infrared ray sensor configured to be capable of detecting the infrared ray and outputting the sensor signal.

As illustrated in FIG. 2, the display 21, the operating unit 22, the storage 25, the load cell 47, the biometric impedance measuring unit 48, the sensor 51, and the time counting unit 52 are electrically connected to the controller 29, and operations of these components are controlled by the controller 29. In addition, a power source (not illustrated) configured to supply required an electric power is connected to these components. The controller 29 includes an arithmetic section (not illustrated) in the interior thereof and executes a variety of operations. The arithmetic operation may be performed by the arithmetic section provided independently from the controller 29.

In particular, in the invention, the controller 29 as a control unit determines the proximity of the user to the weighing machine 100 (the biometric apparatus) on the basis of the sensor signal from the sensor 51 and controls the operating state of the weighing machine 100 on the basis of the result of determination.

Here, in the invention, the operating state of the weighing machine 100 (the biometric apparatus) includes a state in use and a state not in use, and the control of the operating state includes a conversion from the state in use to the state not in use, a conversion from the state not in use to the state in use, a maintenance in the state in use, and a maintenance in the state not in use.

The state in use in the invention means a state in which the weighing machine 100 (the biometric apparatus) is provided for the user to be used, and includes at least one of those described below.
(a) A state in a setting process of the weighing machine 100. More specifically, it means a state in which a mode in which the user performs a setting operation on the weighing machine 100 (the biometric apparatus) (for example, input of age, sex, and height and the like of the user as an initial setting) is in execution, and a state in which the controller 29 activates the display 21 (that is, supplies required electric power) and displays items that is to be input by the user or items input by the user on the display 21. Since measurement of the biometric information is not executed, the controller 29 may cause the biometric information measuring unit (the load cell 47, the biometric impedance measuring unit 48) not to be operated (that is, stop the supply of required electric power).
(b) A state of waiting measurement of the biometric information of the user by the weighing machine 100. More specifically, a state in which the user is still not on the weighing machine 100, but the controller 29 activates the biometric information measuring unit (the load cell 47, the biometric impedance measuring unit 48) (that is, supplies the required electric power), monitors the change of the output values thereof, so that is ready for starting an arithmetic process on the biometric information (weight, biometric impedance) any time. Furthermore, a state in which the display 21 is energized, and predetermined contents may be displayed thereon or are displayed may be included.
(c) A state in a process of measuring the biometric information of the user by the weighing machine 100. More specifically, a state in which the user is on the weighing machine 100 and the controller 29 receives output values from the biometric information measuring unit (the load cell 47 and the biometric impedance measuring unit 48) and then the process of operating the required biometric information (weight, biometric impedance , percentage of body fat, and the like) on the basis of the received output values is terminated. Furthermore, a state in which the display 21 is energized, and predetermined contents are displayed may be included.
(d) A state of displaying the result of measurement of the biometric information. More specifically, a state in which the controller 29 activates the display 21 (that is, supplies required electric power) and displays the required biometric information (weight, percentage of body fat and the like) calculated by the controller 29 on the display 21. Since the measurement of the biometric information is already terminated, the controller 29 may cause the biometric information measuring unit (the load cell 47, the biometric impedance measuring unit 48) not to be operated (that is, stop the supply of required electric power).
   The state not in use in the invention means a state in which the weighing machine 100 (the biometric apparatus) is not provided for the user to be used, and includes at least one of those described below.
(e) A state in which the power source is turned off. More specifically, a state in which the power supply to the controller 29 is stopped and the power supply from the controller 29 to the respective components (the biometric information measuring unit (the load cell 47, the biometric impedance measuring unit 48), the display 21 and the like) is not performed, so that the functions other than those for sensing the operation of the start key or the setting key are stopped.
(f) A state in which the power source is not completely turned off and part of the internal functions is executed. More specifically, either one of a state in which the controller 29 activates the sensor 51 intermittently and the controller 29 determines the proximity of the user by acquiring the sensor signal, a state in which the control unit 29 activates the load cell 47 intermittently and the controller 29 acquires the output value of the load cell 47 to determine whether or not the user gets on the weighing machine 100 , and a state in which a zero-point update function for executing a zero-point update of the load cell 47 intermittently (for example, every hour). A state in which the biometric information measuring unit (specifically, the biometric impedance measuring unit 48) for measuring and acquiring the biometric information of the user is not operated and the display 21 is also not operated.

In the first embodiment, in a state in which the operating state of the weighing machine 100 (the biometric apparatus) is any one of the states in use (a) to (d), the control of the operating state by the controller 29 is to convert the state of the weighing machine 100 from any one of the states in use (a) to (d) to the states not in use (e) or (f) after the controller 29 determines that the user is not in proximity to the weighing machine 100.

In particular, in the first embodiment, in a state in which the operating state of the weighing machine 100 is any one of the states in use (a) to (d), the control of the operating state by the controller 29 is to restrict the conversion of the weighing machine 100 from any one of the states in use (a) to (d) to the states not in use (e) or (f) while the control unit 29 determines that the user is in proximity of the weighing machine 100, and convert the state of the weighing machine 100 from any one of the states in use (a) to (d) to the states not in use (e) or (f) after the controller 29 determines that the user is not in proximity to the weighing machine 100.

Subsequently, a flow of the process of the weighing machine 100 will be described.

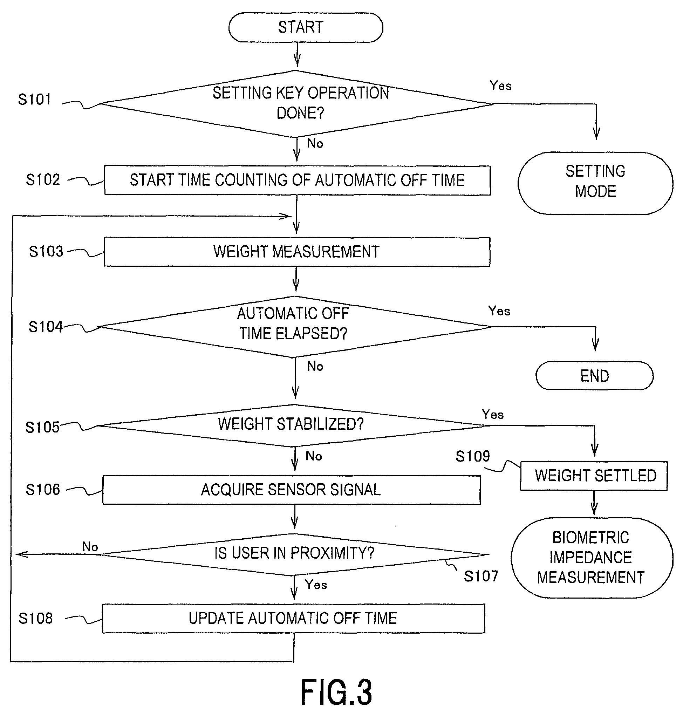

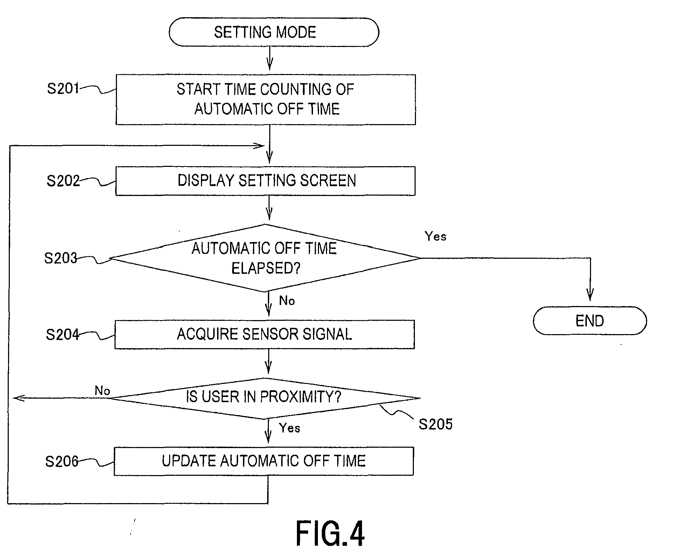

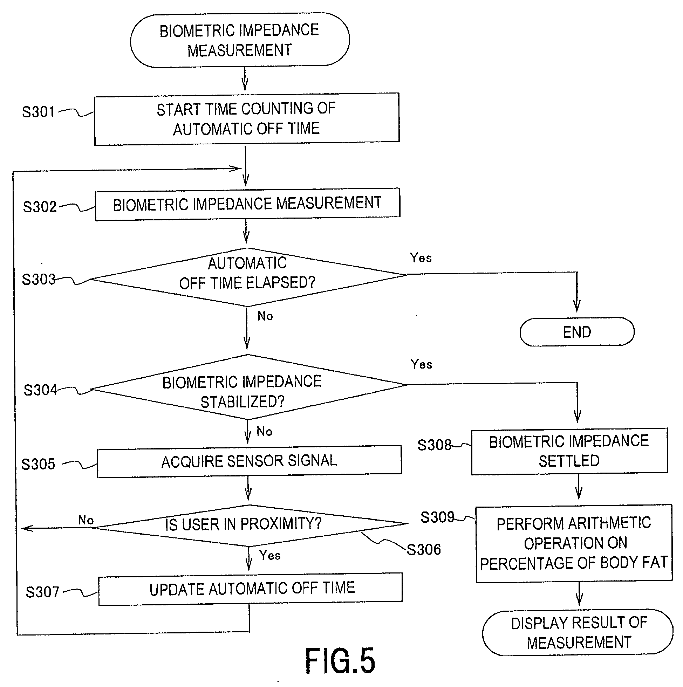

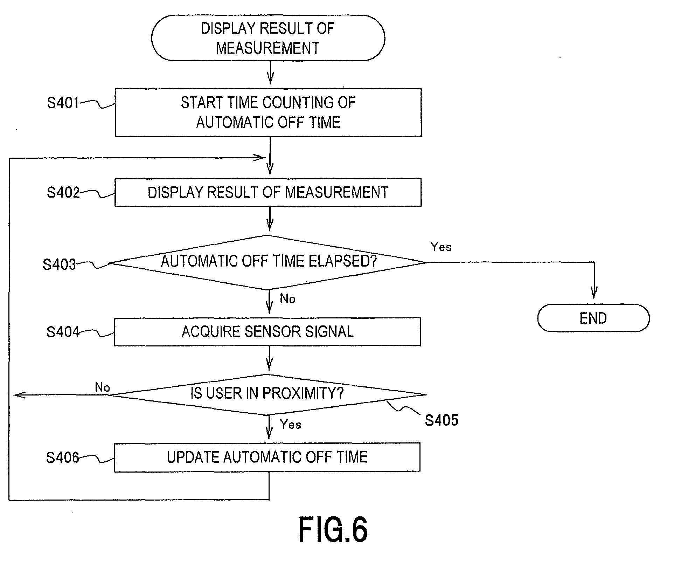

FIG. 3 is a flowchart illustrating a flow of weight measurement by the biometric apparatus according to the first embodiment; FIG. 4 is a flowchart illustrating a flow of the process of the setting mode of the biometric apparatus according to the first embodiment; FIG. 5 is a flowchart illustrating a flow of a measurement of the biometric impedance by the biometric apparatus according to the first embodiment; and FIG. 6 is a flowchart illustrating a flow of display of result of measurement by the biometric apparatus according to the first embodiment.

### Setting Mode

Referring now to FIG. 3 and FIG. 4, the process in the setting mode will be described. In the setting mode, the user inputs biometric information, mainly, age, sex, and height and the like by the operation of the operating unit 22. Since the arithmetic operation of the percentage of body fat described later is performed also on the basis of age, sex, and height of the user in addition to weight or biometric impedance acquired by actual measurement of the user, an initial setting as described above is needed to be performed before performing the measurement by the weighing machine 100.

As illustrated in FIG. 3, when the operation of the weighing machine 100 in the state not in use is started, the controller 29 determines whether the weighing machine 100 is started or not by the operation of a setting key for activating a setting mode from among the operating unit 22 (Step S101) and if the setting key is operated (Yes in Step S101), the controller 29 activates the setting mode (see FIG.4).

As illustrated in FIG. 4, when the setting mode is activated, the controller 29 outputs an instruction signal to start the counting of an automatic off time (predetermined time) to the time counting unit 52, and the time counting unit 52 starts counting of the automatic off time (Step S201). The automatic off time may be programmed in advance as a factory default.

The display 21 displays a setting screen according to the instruction signal from the controller 29 (Step S202). The user inputs the setting items by operating the operating unit 22 while watching the setting screen.

The controller 29 determines whether or not the automatic off time has elapsed on the basis of the time counting by the time counting unit 52 (Step S203).

When it is determined that the automatic off time has not elapsed (No in Step S203), the controller 29 acquires the sensor signal from the sensor 51 (Step S204), and determines whether or not the user is in proximity to the weighing machine 100 (Step S205).

When it is determined that the user is in proximity to the weighing machine 100 (Yes in Step S205), the controller 29 outputs an instruction signal to the time counting unit 52 so as to update the automatic off time and, the time counting unit 52 restarts the measurement of the automatic off time from zero according to the instruction signal (Step S206). The weighing machine 100 continuously displays the setting screen (Step S202) and executes the processes as described above repeatedly.

In contrast, when it is determined that the user is not in proximity to the weighing machine 100 (No in Step S205), the controller 29 continuously displays the setting screen (Step S202) without giving the instruction to update the automatic off time. Therefore, in this case, the time counting of the automatic off time by the time counting unit 52 is proceeded as-is. Then, the same processes are repeated and, when it is determined that the automatic off time is elapsed (Yes in Step S203), the controller 29 converts the weighing machine 100 to the state not in use. In other words, the controller 29 is configured to convert the weighing machine 100 from the state in use to the state not in use when the controller 29 determines that the user is not in proximity to the weighing machine 100 for the automatic off time or longer.

In this manner, since the automatic off time is always updated when the user is in proximity, the weighing machine 100 is not converted to the state not in use. Therefore, inconvenience caused by the current operating state being changed only because of elapse of reference time in a state of non-operation even though the user is still using the biometric apparatus for the initial setting as in the biometric apparatus of the related art is prevented. Also, since the weighing machine 100 is converted into the state not in use especially when such a state is continued for more than the predetermined time after having determined that the user is not in proximity to the biometric apparatus, such a case that the state in use is not continued even though the user is not present does not occur, and hence reduction of power consumption achieved.

### Weight Measurement

Referring now to FIG. 3, a weight measuring process will be described.

When the operation of the weighing machine 100 in the state not in use is started, the controller 29 determines whether the weighing machine 100 is started or not by the operation of a setting key for activating a setting mode from among the operating unit 22 (Step S101), and if the start key, for example, is operated, the controller 29 activates a measuring mode (No in Step S101).

The controller 29 outputs an instruction signal to start the counting of the automatic off time (predetermined time) to the time counting unit 52, and the time counting unit 52 starts counting of the automatic off time (Step S102). The automatic off time may be programmed in advance as a factory default.

The controller 29 starts the weight measurement (Step S103). More specifically, the controller 29 displays predetermined guidance messages to the user, or acquiring the output value at the time of no-load by activating the load cell 47 and setting the acquired value as a zero-point (zero-point update) or, after the zero-point setting, acquires the output value of the load cell 47 when the user gets on the weighing machine 100 and starts the arithmetic operation of the weight value.

The controller 29 determines whether or not the automatic off time has elapsed on the basis of the time counting by the time counting unit 52 (Step S104). When it is determined that the automatic off time has not elapsed (No in Step S104), the controller 29 determines whether or not the output value (the weight value) of the load cell 47 is stabilized (Step S105).

When the output value (the weight value) of the load cell 47 is not stabilized (No in Step S105), the controller 29 acquires the sensor signal from the sensor 51 (Step S106), and determines whether or not the user is in proximity to the weighing machine 100 (Step S107).

When it is determined that the user is in proximity to the weighing machine 100 (Yes in Step S107), the controller 29 outputs an instruction signal to the time counting unit 52 so as to update the automatic off time and, the time counting unit 52 restarts the measurement of the automatic off time from zero according to the instruction signal (Step S108). The weighing machine 100 continuously measures the weight (Step S103) and executes the processes as described above repeatedly. Then, the same processes are repeated and, when it is determined that the output value (the weight value) of the load cell 47 is stabilized (Yes in Step S105), the controller 29 settles the weight value (Step S109), stores the weight value in the storage 25 and proceeds to the biometric impedance measuring process.

In contrast, when it is determined that the user is not in proximity to the weighing machine 100 (No in Step S107), the controller 29 continuously measures the weight (Step S103) without giving the instruction to update the automatic off time. Therefore, in this case, the time counting of the automatic off time by the time counting unit 52 is proceeded as-is.

When it is determined that the user is not in proximity to the weighing machine 100 (No in Step S107), and the output value (the weight value) of the load cell 47 is not stable (No in Step S105), the time counting of the automatic off time is continued to proceed, and when it is determined that the automatic off time is elapsed (Yes in Step S104), the controller 29 converts the weighing machine 100 to the state not in use. In other words, the controller 29 is configured to convert the weighing machine 100 from the state in use to the state not in use when the controller 29 determines that the user is not in proximity to the weighing machine 100 for the automatic off time or longer.

In this manner, since the automatic off time is always updated when the user is in proximity, the weighing machine 100 is not converted to the state not in use. Therefore, inconvenience caused by the current operating state being changed only because of elapse of reference time in a state of unstable weight value even though the user is still using the biometric apparatus for the weight measurement as in the biometric apparatus of the related art is prevented. Also, since the weighing machine 100 is converted into the state not in use when such a state is continued for more than the predetermined time after having determined that the user is not in proximity to the biometric apparatus, such a case that the state in use is not continued even though the user is not present does not occur, and hence reduction of power consumption achieved.

### Measurement of Biometric impedance

Referring now to FIG. 5, a biometric impedance measuring process will be described.

The controller 29 outputs an instruction signal to start the counting of the automatic off time (predetermined time) to the time counting unit 52, and the time counting unit 52 starts counting of the automatic off time (Step S301). The automatic off time may be programmed in advance as a factory default.

The controller 29 starts measurement of the biometric impedance (Step S302). More specifically, the controller 29 causes the display 21 to display the predetermined guidance message for the user, activates the biometric impedance measuring unit 48 to acquire the output value of the biometric impedance measuring unit 48 (the voltage value measured in the predetermined current route passing in the body of the user), and starts the arithmetic operation of the biometric impedance value.

The controller 29 determines whether or not the automatic off time has elapsed on the basis of the time counting by the time counting unit 52 (Step S303). When it is determined that the automatic off time has not elapsed (No in Step S303), the controller 29 determines whether or not the biometric impedance is stabilized (Step S304).

When the biometric impedance is not stabilized (No in Step S304), the controller 29 acquires the sensor signal from the sensor 51 (Step S305), and determines whether or not the user is in proximity to the weighing machine 100 (Step S306).

When it is determined that the user is in proximity to the weighing machine 100 (Yes in Step S306), the controller 29 outputs an instruction signal to the time counting unit 52 so as to update the automatic off time and, the time counting unit 52 restarts the measurement of the automatic off time from zero according to the instruction signal (Step S307). The weighing machine 100 continuously measures the biometric impedance (Step S302) and executes the processes as described above repeatedly. Then, the same processes are repeated and, when it is determined that the biometric impedance is stabilized (Yes in Step S304), the controller 29 settles the biometric impedance (Step S308), performs the arithmetic operation of the percentage of body fat on the basis of the weight, biometric impedance , age, sex, and height and the like (Step S309), stores those values in the storage 25 and proceeds to a result of measurement displaying process.

In contrast, when it is determined that the user is not in proximity to the weighing machine 100 (No in Step S306), the controller 29 continuously measures the biometric impedance (Step S302) without giving the instruction to update the automatic off time. Therefore, in this case, the time counting of the automatic off time by the time counting unit 52 is proceeded as-is.

When it is determined that the user is not in proximity to the weighing machine 100 (No in Step S306), and the biometric impedance is not stable (No in Step S304), the time counting of the automatic off time is continued to proceed, and when it is determined that the automatic off time is elapsed (Yes in Step S303), the controller 29 converts the weighing machine 100 to the state not in use. In other words, the controller 29 is configured to convert the weighing machine 100 from the state in use to the state not in use when the controller 29 determines that the user is not in proximity to the weighing machine 100 for the automatic off time or longer.

In this manner, since the automatic off time is always updated when the user is in proximity, the weighing machine 100 is not converted to the state not in use. Therefore, inconvenience caused by the current operating state being changed only because of elapse of reference time in a state of unstable biometric impedance even though the user is still using the biometric apparatus for the biometric impedance measurement as in the biometric apparatus of the related art is prevented. Also, since the weighing machine 100 is converted into the state not in use especially when such a state is continued for more than the predetermined time after having determined that the user is not in proximity to the biometric apparatus, such a case that the state in use is not continued even though the user is not present does not occur, and hence reduction of power consumption achieved.

### Result of Measurement Display

Referring now to FIG. 6, the result of measurement displaying process will be described.

The controller 29 outputs an instruction signal to start the time counting of the automatic off time (predetermined time) to the time counting unit 52, and the time counting unit 52 starts the time counting of the automatic off time (Step S401). The automatic off time may be programmed in advance as a factory default.

The display 21 displays results of measurement of the biometric information including measure weight and percentage of body fat according to the instruction signal from the control unit 29 (Step S402).

The controller 29 determines whether or not the automatic off time has elapsed on the basis of the time counting by the time counting unit 52 (Step S403).

When it is determined that the automatic off time has not elapsed (No in Step S403), the controller 29 acquires the sensor signal from the sensor 51 (Step S404), and determines whether or not the user is in proximity to the weighing machine 100 (Step S405).

When it is determined that the user is in proximity to the weighing machine 100 (Yes in Step S405), the controller 29 outputs an instruction signal to the time counting unit 52 so as to update the automatic off time and, the time counting unit 52 restarts the measurement of the automatic off time from zero according to the instruction signal (Step S406). The weighing machine 100 continuously displays the results of measurement (Step S402) and executes the processes as described above repeatedly.

In contrast, when it is determined that the user is not in proximity to the weighing machine 100 (No in Step S405), the controller 29 continuously displays the result of measurement (Step S402) without giving the instruction to update the automatic off time. Therefore, in this case, the time counting of the automatic off time by the time counting unit 52 is proceeded as-is. Then, the same processes are repeated and, when it is determined that the automatic off time is elapsed (Yes in Step S403), the controller 29 converts the weighing machine 100 to the state not in use. In other words, the controller 29 is configured to convert the weighing machine 100 from the state in use to the state not in use when the controller 29 determines that the user is not in proximity to the weighing machine 100 for the automatic off time or longer.

In this manner, since the automatic off time is always updated when the user is in proximity, the weighing machine 100 is not converted to the state not in use. Therefore, inconvenience caused by the current operating state being changed only because of elapse of reference time in a state of non-operation even though the user is still confirming the display of result as in the biometric apparatus of the related art is prevented. Also, since the weighing machine 100 is converted into the state not in use when such a state is continued for more than the predetermined time after having determined that the user is not in proximity to the biometric apparatus, such a case that the state in use is not continued even though the user is not present does not occur, and hence reduction of power consumption achieved.

### Modification 1 of First Embodiment

The weighing machine 100 according to the first embodiment described above has been described as a weighting machine with a body fat scale capable of measuring the percentage of body fat in addition to the weight of the user. However, the invention is not limited thereto. In other words, the weighing machine 100 may be a weighing machine capable of only the weight or, in contrast, may be configured as a body composition meter capable of measuring and performing arithmetic operation of more items of biometric information such as the visceral fat level, the muscle mass, the amount of basal metabolism, the bone mass, the body moisture percentage, the BMI, the lean body mass, the intercellular fluid volume, the extracellular fluid volume, and the like.

### Modification 2 of First Embodiment

The weighing machine 100 according to the first embodiment described above has been described as the weighing machine 100 configured to be activated mainly by the pressing of the start key, and then to perform the zero-point update of the load cell, and be converted to a state to allow the measurement. In other words, the operating state of the weighing machine 100 converted to the operating state of the weighing machine 100 before the start key is pressed or the operating state of the weighing machine 100 to be converted by the controller 29 after having elapsed the automatic off state is the state not in use (e) in which the power source is turned off and the functions other than those for sensing the operation of the start key or the setting key are stopped.

However, the invention is not limited thereto, and may be configured as a biometric apparatus of a so-called step-on type provided with a function to activate the apparatus to convert the state of the apparatus to the state in use which allows measurement of biometric information automatically when the fact that a load is applied in the biometric apparatus in the state not in use is sensed. In other words, the operating state of the weighing machine 100 before the start key is pressed or the operating state of the weighing machine 100 converted by the controller 29 after having elapsed the automatic off time may be the state not in use (f) in which the controller 29 activates the load cell 47 intermittently, and the controller 29 determines whether or not the user gets on the weighing machine 100 by acquiring the output value of the load cell 47 and a state in which a zero-point update function for executing a zero-point update of the load cell 47 intermittently (for example, every hour).

### Second Embodiment

Referring now to the drawings, a biometric apparatus according to a second embodiment of the invention will be described.

In the second embodiment, an example in which the invention is applied to a weighting machine (a weighting machine with body fat scale) capable of measuring body fat will be described. The weighing machine according to the second embodiment may be configured to convert the state from the state in use to the state not in use in the same manner as the weighing machine 100 according to the first embodiment. However, the invention is also applicable to the biometric apparatus which does not convert the state from the state in use to the state not in use.

In the following description, the weighing machine according to the second embodiment has the same configuration as the weighing machine 100 according to the first embodiment. Therefore, detailed descriptions of the same components are omitted.

In the second embodiment, in a state in which the operating state of the weighing machine 100 (the biometric apparatus) is the state not in use (f), the control of the operating state by the controller 29 is to convert the state of the weighing machine 100 from the state not in use (f) to the state in use (b) after the controller 29 determines that the user is in proximity to the weighing machine 100.

In particular, according to the second embodiment, the controller 29 is configured to set a load signal acquired from the load cell 47 as a zero-point when the controller 29 determines that the user is in proximity to the weighing machine 100.

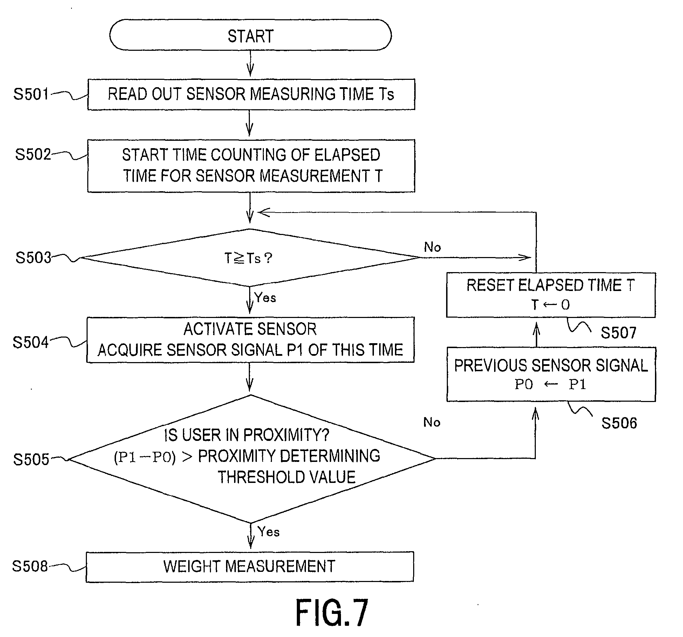

Referring now to FIG. 7, a process until the weighing machine 100 in the state not in use is converted to the state in use will be described. FIG. 7 is a flowchart illustrating a flow of a process when the biometric apparatus is in the state not in use according to the second embodiment of the invention.

When the state not in use (f) of the weighing machine 100 is started, the controller 29 reads out a time Ts (a sensor measuring time) to execute measurement by the sensor 51 from the storage 25 (Step S501) The time Ts may be programmed in advance as a factory default.

Subsequently, the controller 29 causes the time counting unit 52 to start the time counting of an elapsed time T (elapsed time for sensor measurement) for causing the time counting unit 52 to perform measurement by the sensor 51 at every time Ts intermittently (Step S502). At this time, the controller 29 acquires an initial value P0 of a sensor signal from the sensor 51.

The controller 29 determines whether or not the elapsed time T that the time counting unit 52 counts reaches or exceeds the time Ts (Step S503). When the elapsed time T is smaller than the time Ts (No in Step S503), the controller 29 repeats the determination of the Step S503.

When the elapsed time T reaches or exceeds the time Ts (Yes in Step S503), the controller 29 activates the sensor 51, and acquires a sensor signal P1 (the sensor signal of this time) (Step S504).

The controller 29 calculates the difference between the sensor signal P1 acquired in Step S504 immediately before and the previous value (initial value) P0 of the sensor signal acquired in Step S502, compares the difference and a proximity determining threshold value (predetermined threshold value), and determines whether or not the user is in proximity to the weighing machine 100 (Step S505). Here, the proximity determining threshold value is data stored in the storage 25 in advance and is read out by the controller 29.

When the above-described difference (P1-P0) does not exceed the proximity determining threshold value, the controller 29 determines that the user is not in proximity (No in Step S505), and the controller 29 replaces P0 by P1 (Step S506) and terminates the determination of this time, returns the elapsed time T to zero for the next new determination (Step S507), and performs the processes from Step S503 onward.

In contrast, when the above-described difference (P1-P0) is larger than the proximity determining threshold value, the controller 29 determines that the user is in proximity (Yes in Step S505), and the controller 29 brings the weighing machine 100 to the weight measuring process (Step S508) In other words, in a case in which the operating state of the weighing machine 100 is in the state not in use, if the controller 29 determines that the user is in proximity to the weighing machine 100, the controller 29 converts the weighing machine 100 from the state not in use to the state in use.

In this manner, with the configuration in which converting the state of the weighing machine 100 from the state not in use to the state in use depends on the proximity of the user, useless power consumption due to the conversion of the apparatus in the state not in use to the state in use as a result of erroneous sensing of the radio waver noise or the like as the load of the user as in the case of the so-called step-on type biometric apparatus of the related art is prevented.

Since the procedures of the weight measuring process, and the biometric impedance measuring process and the result of measurement displaying process hereafter, and the procedure of process of the setting mode are the same as those in the case of the first embodiment (FIG. 3 to FIG. 6), the description will be omitted. However, in the weight measuring process (Step S508), the controller 29 executes the zero-point update in which the user activates the load cell 47 before getting on the weighing machine 100, acquires the output value at the time of no-load, and sets the acquired value as a zero-point.

Accordingly, since the zero-point update is executed when the controller determines that the user is in proximity to the biometric apparatus, measurement of the weight on the basis of the zero-point updated immediately before the measurement of the weight is enabled, so that the accuracy of the measurement is expected. In addition, it is no longer necessary to execute the zero-point update process of the load cell intermittently (for example, every hour) during the state not in use as in the case of the biometric apparatus of the related art, and hence reduction of power consumption is achieved.

### Modification 1 of Second Embodiment

The weighing machine 100 according to the second embodiment described above has been described as a weighting machine with a body fat scale capable of measuring the percentage of body fat in addition to the weight of the user. However, the invention is not limited thereto. In other words, the weighing machine 100 may be a weighing machine capable of only the weight or, in contrast, may be configured as a body composition meter capable of measuring and performing arithmetic operation of more items of biometric information such as the visceral fat level, the muscle mass, the amount of basal metabolism, the bone mass, the body moisture percentage, the BMI, the lean body mass, the intercellular fluid volume, the extracellular fluid volume, and the like.

### Modification 2 of Second Embodiment

In the determination of proximity of the user to the weighing machine 100 according to the second embodiment described above, an example in which the controller determines that the user is in proximity to the biometric apparatus when the difference between the sensor signal P1 acquired from the sensor 51 at the time of determination of proximity of this time and the sensor signal P0 acquired from the sensor 51 at the time of determination of proximity of the previous time is larger than the proximity determining threshold value as in Step S505 in FIG. 7 has been described. It is specifically preferable to employ an illuminance sensor as the sensor 51 because the influence of the brightness in the room in which the weighing machine 100 is installed is reduced, and the determination of proximity of the user is achieved with high degree of precision. It is also possible to configure the controller 29 to determine that the user is in proximity to the weighing machine 100 when the sensor signal from the sensor 51 is larger than the proximity determining threshold value (predetermined threshold value) as in the first embodiment.

### Third Embodiment

Referring now to the drawings, a biometric apparatus according to a third embodiment of the invention will be described.

In the third embodiment, an example in which the invention is applied to a weighting machine (a weighting machine with body fat scale) capable of measuring body fat will be described. The weighing machine according to the third embodiment may be configured to convert the state from the state in use to the state not in use in the same manner as the weighing machine 100 according to the first embodiment. However, the invention is also applicable to the biometric apparatus which does not convert the state for the state in use to the state not in use.

In the following description, the weighing machine according to the third embodiment has the same configuration as the weighing machine 100 according to the first embodiment. Therefore, detailed descriptions of the same components are omitted.

In the third embodiment, in a state in which the operating state of the weighing machine 100 (the biometric apparatus) is the state not in use (f), the control of the operating state by the controller 29 is to convert the state of the weighing machine 100 from the state not in use (f) to the state in use (c) when the controller 29 determines that the user is in proximity to the weighing machine 100 and the controller 29 senses that the user gets on the weighing machine 100 on the basis of the load signal that the controller 29 acquired from the load cell 47.

Therefore, in the weighing machine 100 according to the third embodiment, the zero-point update process that sets an output value of the load cell at the time when no load is applied as a zero-point is intermittently (every hour for example) executed while the apparatus is in the state not in use (f).

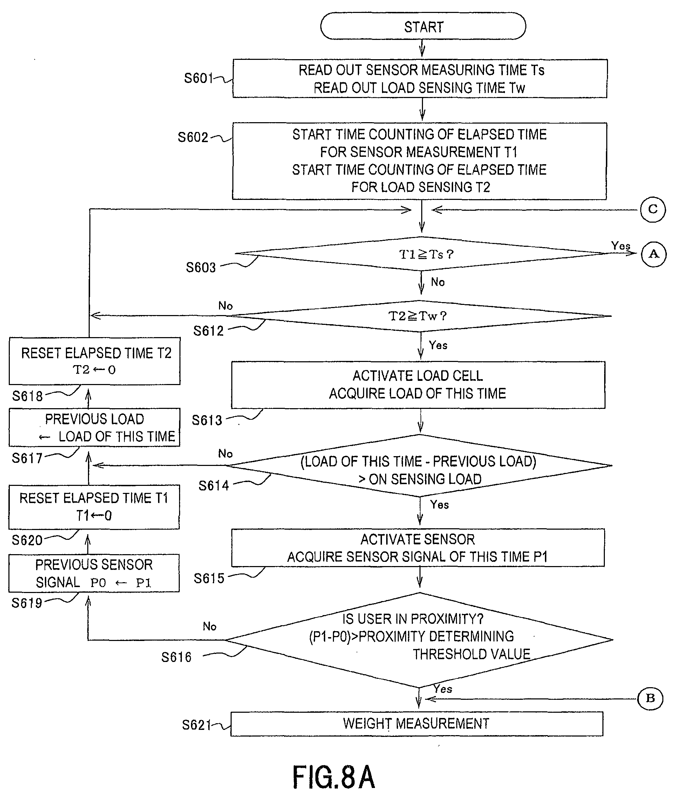

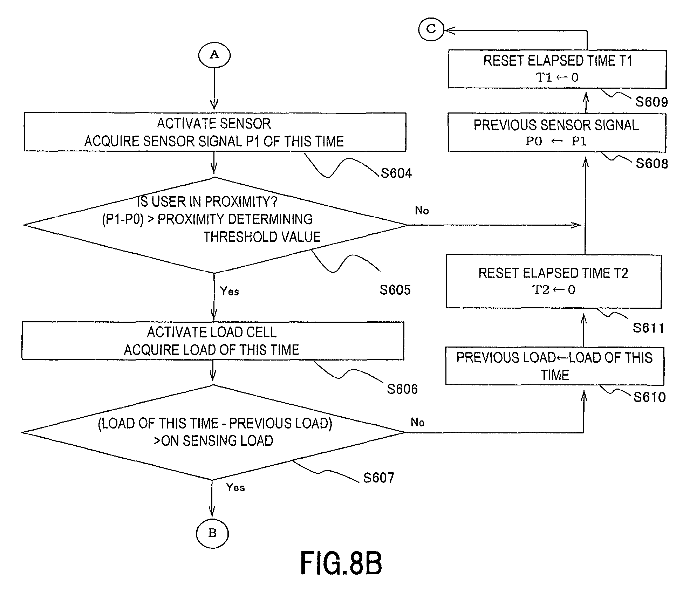

Referring now to FIG. 8A and FIG. 8B, a process until the weighing machine 100 in the state not in use is converted to the state in use will be described. FIG. 8A and FIG. 8B are flowcharts illustrating a flow of a process when the biometric apparatus is in the state not in use according to the third embodiment of the invention.

When the state not in use (f) of the weighing machine 100 is started, the controller 29 reads out a time Ts (a sensor measuring time) to execute measurement by the sensor 51 from the storage 25 an a time Tw (a load sensing time) to execute sensing of the load signal from the load cell 47 (Step 601). The times Ts and Tw may be programmed to have different lengths in advance as factory defaults.

Subsequently, the controller 29 causes the time counting unit 52 to start time counting of an elapsed time T1 (elapsed time for sensor measurement) to perform measurement by the sensor 51 at every time Ts intermittently and an elapsed time T2 (elapsed time for load sensing) for causing the time counting unit 52 to perform measurement by the load cell 47 at every time Tw intermittently (Step S602). At this time, the controller 29 acquires the initial value P0 of the sensor signal from the sensor 51 and the output value (load) of the load cell 47, respectively.

The controller 29 determines whether or not the elapsed time T1 that the time counting unit 52 counts reaches or exceeds the time Ts (Step S603). When the elapsed time T1 is smaller than the time Ts (No in Step S603), the controller 29 determines whether or not the elapsed time T2 that the time counting unit 52 counts reaches or exceeds the time Tw (Step S612). When the elapsed time T1 is smaller than the time Ts and the elapsed time T2 is smaller than the time Tw (No in Step S603, No in Step S612), the controller 29 repeats the determination of Step S603 and Step S612.

### (1) Step S604 to S611

When the elapsed time T1 reaches or exceeds the time Ts (Yes in Step S603), the controller 29 activates the sensor 51, and acquires the sensor signal P1 (the sensor signal of this time) (Step S604).

The controller 29 calculates the difference between the sensor signal P1 acquired in Step S604 immediately before and the previous value (initial value) P0 of the sensor signal acquired in Step S602, compares the difference and a proximity determining threshold value (predetermined threshold value), and determines whether or not the user is in proximity to the weighing machine 100 (Step S605). Here, the proximity determining threshold value is data stored in the storage 25 in advance and is read out by the controller 29.

When the above-described difference (P1-P0) does not exceed the proximity determining threshold value, the controller 29 determines that the user is not in proximity (No in Step S605), and the controller 29 replaces P0 by P1 (Step S608) and terminates the determination of proximity of this time, returns the elapsed time T1 to zero for the next new determination of proximity (Step S609), and performs the processes from Step S603 onward.

In this manner, when the elapsed time for sensor measurement T1 measured by the time counting unit 52 reaches or exceeds the sensor measuring time Ts, the sensor signal is acquired from the sensor 51, and determination of the proximity of the user to the weighing machine 100 is repeated.

In contrast, when the above-described difference (P1-P0) is larger than the proximity determining threshold value, the controller 29 determines that the user is in proximity (Yes in Step S605), and the control unit 29 activates the load cell 47 to acquire the load signal (the load of this time) (Step S606).

The controller 29 calculates the difference between the load of this time acquired in Step S606 immediately before and the previous load (initial value) acquired in Step S602, compares the difference and an on sensing load (predetermined threshold value), and senses whether or not the user gets on the weighing machine 100 (Step S607). Here, the on sensing load is data stored in the storage 25 in advance and is read out by the controller 29.

When the above-described difference (load of this time-previous load) does not exceed the on sensing load, the controller 29 determines that the user is not on the weighing machine 100 (No in Step S607), and the controller 29 replaces the previous load by the load of this time (Step S610) and terminates the load sensing of this time, returns the elapsed time T2 to zero for the next new load sensing (Step S611). The controller 29 replaces P0 by P1 (Step S608) and terminates the determination of proximity of this time, returns the elapsed time T1 to zero for the next new determination of proximity (Step S609), and performs the processes from Step S603 onward.

In this manner, when the elapsed time for sensor measurement T1 measured by the time counting unit 52 reaches or exceeds the sensor measuring time Ts before the elapsed time for load sensing T2 measured by the time counting unit 52 reaches or exceeds the load sensing time Tw, the controller 29 acquires the sensor signal from the sensor 51, determines the proximity of the user to the weighing machine 100, acquires the load signal from the load cell 47 , and senses whether or not the user gets on the weighing machine 100.

In Step S607, when the above-described difference (load of this time-previous load) is larger than the on sensing load, (Yes in Step S607), and the controller 29 brings the weighing machine 100 to the weight measuring process (Step S621).

### (2) Step S612 to S620

When the elapsed time T1 is smaller than the time Ts (No in Step S603) and the elapsed time T2 reaches and exceeds the time Tw (Yes in Step S612), the controller 29 activates the load cell 47, and acquires the load signal (the load of this time) (Step S613).

The controller 29 calculates the difference between the load of this time acquired in Step S613 immediately before and the previous load (initial value) acquired in Step S602, compares the difference and the on sensing load (predetermined threshold value), and senses whether or not the user gets on the weighing machine 100 (Step S614).

When the above-described difference (load of this time-previous load) does not exceed the on sensing load, the controller 29 determines that the user is not on the weighing machine 100 (No in Step S614), and the controller 29 replaces the previous load by the load of this time (Step S617) and terminates the load sensing of this time, returns the elapsed time T2 to zero for the next new load sensing (Step S618), and the process from Step S603 onward is performed.

In this manner, when the elapsed time for load sensing T2 measured by the time counting unit 52 reaches or exceeds the load sensing time Tw, a process of acquiring the load signal from the load cell 47 to sense whether or not the user gets on the weighing machine 100 is repeated.

In contrast, when the above-described difference (load of this time-previous load) is larger than the on sensing load, the controller 29 determines that the user is on the weighing machine 100 (Yes in Step S614), and the controller 29 activates the sensor 51 to acquire the sensor signal p1 (the sensor signal of this time) (Step S615).

The controller 29 calculates the difference between the sensor signal P1 acquired in Step S615 immediately before and the previous value (initial value) P0 of the sensor signal acquired in Step S602, compares the difference and a proximity determining threshold value (predetermined threshold value), and determines whether or not the user is in proximity to the weighing machine 100 (Step S616).

When the above-described difference (P1-P0) does not exceed the proximity determining threshold value, the controller 29 determines that the user is not in proximity (No in Step S616), and the controller 29 replaces P0 by P1 (Step S619) and terminates the determination of proximity of this time, returns the elapsed time T1 to zero for the next new determination of proximity (Step S620). The controller 29 replaces the previous load by the load of this time (Step S617) and terminates the load sensing of this time, returns the elapsed time T2 to zero for the next new load sensing (Step S618), and performs the processes from Step S603 onward.

In this manner, when the elapsed time for load sensing T2 measured by the time counting unit 52 reaches or exceeds the load sensing time Tw before the elapsed time for sensor measurement T1 measured by the time counting unit 52 reaches or exceeds the sensor measuring time Ts, the controller 29 acquires the load signal from the load cell 47 and senses whether or not the user gets on the weighing machine 100, and then acquires a sensor signal from the sensor 51 to determine the proximity of the user to the weighing machine 100.

In Step S616, when the above-described difference (P1-P0) is larger than the proximity determining threshold value (Yes in Step S616), and the controller 29 brings the weighing machine 100 to the weight measuring process (Step S621).

In this manner, since the operating state is controlled so that the biometric apparatus is converted from the state not in use to the state in use depending on the fact that the user is in the proximity to the weighing machine 100 and the user is on the weighing machine 100, the fact that the user is on the weighing machine 100 is determined with high degree of accuracy and hence the conversion to the state in use due to the erroneous sensing is prevented and reduction of power consumption is achieved.

### Modification 1 of third Embodiment

The weighing machine 100 of the third embodiment described above may be a weighing machine capable of measuring only the weight or, in contrast, may be configured as a body composition meter capable of measuring and performing arithmetic operation of more items of biometric information such as the visceral fat level, the muscle mass, the amount of basal metabolism, the bone mass, the body moisture percentage, the BMI, the lean body mass, the intercellular fluid volume, the extracellular fluid volume, and the like.

### Modification 2 of Third Embodiment

In the determination of proximity of the user to the weighing machine 100 and the load sensing according to the third embodiment described above, an example in which whether or not the difference between the value of this time and the previous value of the sensor 51 or the load cell 47 is larger than the predetermined threshold value is determined as in Steps S605, S607, S614, and S616 in FIG. 8A and FIG. 8B has been described. It is specifically preferable to employ an illuminance sensor as the sensor 51 because the influence of the brightness in the room in which the weighing machine 100 is installed is reduced, and the determination of proximity of the user is achieved with high degree of precision. It is also possible to configure the controller 29 to determine that the user is in proximity to or on the weighing machine 100 when the value of this time of the sensor 51 or the load cell 47 is larger than the proximity determining threshold value or the on sensing load (predetermined threshold value).

## Claims

1. A biometric apparatus (100) configured to measure biometric information of a user comprising:
a biometric information measuring unit (29, 47, 48) configured to measure the biometric information;
a sensor (51) configured to output a sensor signal according to the proximity of the user to the biometric apparatus (100);
a controller (29) configured to determine the proximity of the user to the biometric apparatus (100) on the basis of the sensor signal and control the operating state of the biometric apparatus (100) on the basis of the result of determination thereof; and
a time counting unit (52) configured to be operated under the control of the controller (29) and count an automatic off time according to an instruction signal from the controller (29),
**characterized in that**
when it is determined that the user is in proximity to the biometric apparatus (100), the controller (29) is configured to output the instruction signal to the time counting unit (52) so as to update the automatic off time, and the time counting unit (52) is configured to restart the counting of the automatic off time from zero according to the instruction signal.

2. The biometric apparatus (100) according to Claim 1, wherein in a case where the operating state of the biometric apparatus (100) is a state in use, the control of the operating state by the controller (29) is to convert the biometric apparatus (100) from the state in use to a state not in use after the controller (29) determines that the user is not in proximity to the biometric apparatus (100).

3. The biometric apparatus (100) according to Claim 1, wherein in a case where the operating state of the biometric apparatus (100) is a state in use, the control of the operating state by the controller (29) is to restrict the conversion of the biometric apparatus (100) from the state in use to a state not in use while the controller (29) determines that the user is in proximity to the biometric apparatus (100) and convert the biometric apparatus (100) from the state in use to the state not in use after the controller (29) determines that the user is not in proximity to the biometric apparatus (100).

4. The biometric apparatus (100) according to any one of Claims 1 to 3, wherein in a case where the operating state of the biometric apparatus (100) is a state in use, the control of the operating state by the controller (29) is to convert the biometric apparatus (100) from the state in use to a state not in use when the controller (29) determines that the user is not in proximity to the biometric apparatus (100) for a predetermined time or longer by the controller (29).

5. The biometric apparatus (100) according to any one of Claims 2 to 4, wherein the state in use includes at least one of a state in a setting process of the biometric apparatus (100) by the user, a state of waiting measurement of the biometric information of the user by the biometric information measuring unit (29, 47, 48), a state in a process of measuring the biometric information of the user by the biometric information measuring unit (29, 47, 48), and a state in a process of displaying a result of measurement of the biometric information.

6. The biometric apparatus (100) according to Claim 1, wherein in a case where the operating state of the biometric apparatus (100) is a state not in use, the control of the operating state by the controller (29) is to convert the biometric apparatus (100) from the state not in use to a state in use when the controller (29) determines that the user is in proximity to the biometric apparatus (100).

7. The biometric apparatus (100) according to Claim 1 or 6, wherein the biometric information measuring unit (29, 47, 48) includes a load cell (47) outputting a load signal according to a load applied to the biometric apparatus (100), and
the controller (29) sets the load signal acquired from the load cell (47) as a zero-point when the controller (29) determines that the user is in proximity to the biometric apparatus (100).

8. The biometric apparatus (100) according to Claim 1, wherein the biometric information measuring unit (29, 47, 48) includes a load cell (47) outputting a load signal according to a load applied to the biometric apparatus (100), and
in a case where the operating state of the biometric apparatus (100) is a state not in use, the control of the operating state by the controller (29) is to convert the biometric apparatus (100) from the state not in use to a state in use when the controller (29) determines that the user is in proximity to the biometric apparatus (100) and when the controller (29) senses the fact that the user gets on the biometric apparatus (100) on the basis of the load signal acquired from the load cell (47).

9. The biometric apparatus (100) according to any one of Claims 6 to 8, wherein the controller (29) repeats a process of acquiring the sensor signal from the sensor (51) and determines the proximity of the user to the biometric apparatus (100) when an elapsed time for sensor measurement (T1) measured by a time counting unit (52) reaches or exceeds a sensor measuring time (Ts)

10. The biometric apparatus (100) according to Claim 8, wherein the controller (29) repeats a process of acquiring the load signal from the load cell (47) and senses whether or not the user gets on the biometric apparatus (100) when an elapsed time for load sensing (T2) measured by a time counting unit (52) reaches or exceeds a load sensing time (Tw).

11. The biometric apparatus (100) according to Claim 8, wherein when an elapsed time for sensor measurement (T1) measured by a time counting unit (52) reaches or exceeds a sensor measuring time (Ts) before an elapsed time for load sensing (T2) measured by the time counting unit (52) reaches or exceeds a load sensing time (Tw), the controller (29) acquires the sensor signal from the sensor (51), determines the proximity of the user to the biometric apparatus (100), acquires the load signal form the load cell (47), and senses whether or not the user gets on the biometric apparatus (100),
when the elapsed time for load sensing (T2) measured by the time counting unit (52) reaches or exceeds the load sensing time (Tw) before the elapsed time for sensor measurement (T1) measured by the time counting unit (52) reaches or exceeds the sensor measuring time (Ts), the controller (29) acquires the load signal from the load cell (47) and senses whether or not the user gets on the biometric apparatus (100), acquires the sensor signal from the sensor (51), and then determines the proximity of the user to the biometric apparatus (100).

12. The biometric apparatus (100) according to any one of Claims 1 to 11, wherein the sensor (51) is an infrared ray sensor capable of detecting an infrared ray and outputting a sensor signal, and
the controller (29) determines that the user is in proximity to the biometric apparatus (100) when the sensor signal from the infrared ray sensor is larger than a predetermined threshold value.

13. The biometric apparatus (100) according to any one of Claims 1 to 11, wherein the sensor (51) is an illuminance sensor and
the controller (29) determines that the user is in proximity to the biometric apparatus (100) when the difference between the sensor signal acquired from the illuminance sensor at the time of determination of proximity of this time and the sensor signal acquired from the illuminance sensor at the time of determination of proximity of the previous time is larger than the predetermined threshold value.

## Patentansprüche

1. Biometrische Vorrichtung (100), die konfiguriert ist, um biometrische Informationen eines Anwenders zu messen, mit:
einer Messeinheit für biometrische Informationen (29, 47, 48), die konfiguriert ist, um die biometrischen Informationen zu messen;
einem Sensor (51), der konfiguriert ist, um ein Sensorsignal entsprechend der Nähe des Anwenders zur biometrischen Vorrichtung (100) auszugeben;
einer Steuereinrichtung (29), die konfiguriert ist, um die Nähe des Anwenders zur biometrischen Vorrichtung (100) auf der Basis des Sensorsignals festzustellen und den Betriebszustand der biometrischen Vorrichtung (100) auf der Basis des Ergebnisses von deren Feststellung zu steuern; und
einer Zeitzähleinheit (52), die konfiguriert ist, um unter der Steuerung der Steuereinrichtung (29) betrieben zu werden und eine automatische Ausschaltzeit entsprechend einem Anweisungssignal von der Steuereinrichtung (29) zu zählen,
**dadurch gekennzeichnet, dass,**
wenn festgestellt wird, dass sich der Anwender in der Nähe der biometrischen Vorrichtung (100) befindet, die Steuereinrichtung (29) konfiguriert ist, um ein Anweisungssignal zur Zeitzähleinheit (52) auszugeben, um so die automatische Ausschaltzeit zu aktualisieren, wobei die Zeitzähleinheit (52) konfiguriert ist, um das Zählen der automatischen Ausschaltzeit von Null entsprechend dem Anweisungssignal erneut zu starten.

2. Biometrische Vorrichtung (100) nach Anspruch 1, wobei in einem Fall, in dem sich der Betriebszustand der biometrischen Vorrichtung (100) in einem Zustand der Benutzung befindet, die Steuerung des Betriebszustands durch die Steuereinrichtung (29) darin besteht, die biometrische Vorrichtung (100) vom Zustand der Benutzung in einen Zustand der Nichtbenutzung umzuwandeln, nachdem die Steuereinrichtung (29) feststellt, dass sich der Anwender nicht in der Nähe der biometrischen Vorrichtung (100) befindet.

3. Biometrische Vorrichtung (100) nach Anspruch 1, wobei in einem Fall, in dem sich der Betriebszustand der biometrischen Vorrichtung (100) in einem Zustand der Benutzung befindet, die Steuerung des Betriebszustands durch die Steuereinrichtung (29) darin besteht, die Umwandlung der biometrischen Vorrichtung (100) von dem Zustand der Benutzung in einen Zustand der Nichtbenutzung einzuschränken, während die Steuereinrichtung (29) feststellt, dass sich der Anwender in der Nähe der biometrischen Vorrichtung (100) befindet und die biometrische Vorrichtung (100) von dem Zustand der Benutzung in einen Zustand der Nichtbenutzung umzuwandeln, nachdem die Steuereinrichtung (29) feststellt, dass sich der Anwender nicht in der Nähe der biometrischen Vorrichtung (100) befindet.

4. Biometrische Vorrichtung (100) nach einem der Ansprüche 1 bis 3, wobei in einem Fall, in dem sich der Betriebszustand der biometrischen Vorrichtung (100) in einem Zustand der Benutzung befindet, die Steuerung des Betriebszustands durch die Steuereinrichtung (29) darin besteht, die biometrische Vorrichtung (100) vom Zustand der Benutzung in einen Zustand der Nichtbenutzung umzuwandeln, wenn die Steuereinrichtung (29) feststellt, dass sich der Anwender für eine vorgegebene Zeit oder länger nicht in der Nähe der biometrischen Vorrichtung (100) durch die Steuereinrichtung (29) befindet.

5. Biometrische Vorrichtung (100) nach einem der Ansprüche 2 bis 4, wobei der Zustand der Benutzung wenigstens einen Zustand in einem Einstellverfahren der biometrischen Vorrichtung (100) durch den Anwender, einen Zustand des Wartens auf die Messung der biometrischen Informationen des Anwenders durch die Messeinheit für biometrische Informationen (29, 47, 48), einen Zustand in einem Verfahren zum Messen der biometrischen Informationen des Anwenders durch die Messeinheit für biometrische Informationen (29, 47, 48) oder einen Zustand in einem Verfahren zum Anzeigen eines Ergebnisses der Messung der biometrischen Informationen aufweist.

6. Biometrische Vorrichtung (100) nach Anspruch 1, wobei in einem Fall, in dem sich der Betriebszustand der biometrischen Vorrichtung (100) in einem Zustand der Nichtbenutzung befindet, die Steuerung des Betriebszustands durch die Steuereinrichtung (29) darin besteht, die biometrische Vorrichtung (100) von dem Zustand der Nichtbenutzung in einen Zustand der Benutzung umzuwandeln, wenn die Steuereinrichtung (29) feststellt, dass sich der Anwender in der Nähe der biometrischen Vorrichtung (100) befindet.

7. Biometrische Vorrichtung (100) nach Anspruch 1 oder 6, wobei die Messeinheit für biometrische Informationen (29, 47, 48) eine Wiegezelle (47) aufweist, die ein Wiegesignal entsprechend der auf der biometrischen Vorrichtung (100) aufgebrachten Last ausgibt, und
die Steuereinrichtung (29) das anhand der Wiegezelle erlangte Wiegesignal als einen Nullpunkt einstellt, wenn die Steuereinrichtung (29) feststellt, dass sich der Anwender in der Nähe der biometrischen Vorrichtung (100) befindet.

8. Biometrische Vorrichtung (100) nach Anspruch 1, wobei die Messeinheit für biometrische Informationen (29, 47, 48) eine Wiegezelle (47) aufweist, die ein Wiegesignal entsprechend einer auf der biometrischen Vorrichtung (100) aufgebrachten Last ausgibt, und
in einem Fall, in dem sich der Betriebszustand der biometrischen Vorrichtung (100) in einem Zustand der Nichtbenutzung befindet, die Steuerung des Betriebszustands durch die Steuereinrichtung (29) darin besteht, die biometrische Vorrichtung (100) vom Zustand der Nichtbenutzung in einen Zustand der Benutzung umzuwandeln, wenn die Steuereinrichtung (29) feststellt, dass sich der Anwender in der Nähe der biometrischen Vorrichtung (100) befindet, und wenn die Steuereinrichtung (29) auf der Basis des von der Wiegezelle (47) erlangten Wiegesignals die Tatsache erfasst, dass der Anwender auf die biometrische Vorrichtung (100) steigt.

9. Biometrische Vorrichtung (100) nach einem der Ansprüche 6 bis 8, wobei die Steuereinrichtung (29) ein Verfahren zum Erlangen des Sensorsignals vom Sensor (51) wiederholt und die Nähe des Anwenders zur biometrischen Vorrichtung (100) feststellt, wenn ein von der Zeitzähleinheit (52) gemessener abgelaufener Zeitpunkt für die Sensormessung (T1) einen Sensormesszeitpunkt (Ts) erreicht oder überschreitet.

10. Biometrische Vorrichtung (100) nach Anspruch 8, wobei die Steuereinrichtung (29) ein Verfahren zum Erlangen des Wiegesignals von der Wiegezelle (47) wiederholt und erfasst, ob der Anwender auf die biometrische Vorrichtung (100) steigt oder nicht, wenn ein von der Zeitzähleinheit (52) gemessener abgelaufener Zeitpunkt für die Wiegeerfassung (T2) einen Wiegeerfassungszeitpunkt (Tw) erreicht oder überschreitet.

11. Biometrische Vorrichtung (100) nach Anspruch 8, wobei, wenn ein von der Zeitzähleinheit (52) gemessener abgelaufener Zeitpunkt für die Sensormessung (T1) einen Sensormesszeitpunkt (Ts) erreicht oder überschreitet, bevor ein von der Zeitzähleinheit (52) gemessener abgelaufener Zeitpunkt für die Wiegeerfassung (T2) einen Wiegeerfassungszeitpunkt (Tw) erreicht oder überschreitet, die Steuereinrichtung (29) das Sensorsignal vom Sensor (51) erlangt, die Nähe des Anwenders zur biometrischen Vorrichtung (100) feststellt, ein Wiegesignal von der Wiegezelle (47) erlangt und erfasst, ob der Anwender auf die biometrische Vorrichtung (100) steigt oder nicht,
wenn ein von der Zeitzähleinheit (52) gemessener abgelaufener Zeitpunkt für die Wiegeerfassung (T2) einen Wiegeerfassungszeitpunkt (Tw) erreicht oder überschreitet, bevor ein von der Zeitzähleinheit (52) gemessener abgelaufener Zeitpunkt für die Sensormessung (T1) einen Sensormesszeitpunkt (Ts) erreicht oder überschreitet, die Steuereinrichtung (29) das Wiegesignal von der Wiegezelle (47) erlangt und erfasst, ob der Anwender auf die biometrische Vorrichtung (100) steigt oder nicht, das Sensorsignal vom Sensor (51) erlangt und dann die Nähe des Anwenders zur biometrischen Vorrichtung (100) feststellt.

12. Biometrische Vorrichtung (100) nach einem der Ansprüche 1 bis 11, wobei der Sensor (51) ein Infrarotstrahlsensor ist, der in der Lage ist, Infrarotstrahlen zu erkennen und ein Sensorsignal auszugeben, und
die Steuereinrichtung (29) feststellt, dass sich der Anwender in der Nähe der biometrischen Vorrichtung (100) befindet, wenn das Sensorsignal vom Infrarotstrahlsensor größer ist als ein vorgegebener Schwellenwert.

13. Biometrische Vorrichtung (100) nach einem der Ansprüche 1 bis 11, wobei der Sensor (51) ein Lichtstärkensensor ist und
die Steuereinrichtung (29) feststellt, dass sich der Anwender in der Nähe der biometrischen Vorrichtung (100) befindet, wenn die Differenz zwischen dem Sensorsignal, das anhand des Lichtstärkensensors zum Zeitpunkt der Feststellung der Nähe an diesem Zeitpunkt erlangt wird, und dem Sensorsignal, das anhand des Lichtstärkensensors zum Zeitpunkt der Feststellung der Nähe zu einem früheren Zeitpunkt erlangt wird, größer ist als der vorgegebene Schwellenwert.

## Revendications

1. Appareil biométrique (100) configuré pour mesurer des informations biométriques d'un utilisateur comprenant :
une unité de mesure d'informations biométriques (29, 47, 48) configurée pour mesurer les informations biométriques ;
un capteur (51) configuré pour fournir en sortie un signal de capteur fonction de la proximité de l'utilisateur avec l'appareil biométrique (100) ;
un contrôleur (29) configuré pour déterminer la proximité de l'utilisateur avec l'appareil biométrique (100) en se basant sur le signal du capteur et pour commander l'état de fonctionnement de l'appareil biométrique (100) en se basant sur le résultat de sa détermination ; et
une unité de comptage du temps (52) configurée pour être actionnée sous le contrôle du contrôleur (29) et pour compter un temps d'arrêt automatique conformément à un signal d'instruction provenant du contrôleur (29),
**caractérisé en ce que**
lorsqu'on a déterminé que l'utilisateur est à proximité de l'appareil biométrique (100), le contrôleur (29) est configuré pour délivrer en sortie le signal d'instruction à l'unité de comptage du temps (52) de façon à mettre à jour le temps d'arrêt automatique, et l'unité de comptage du temps (52) est configurée pour redémarrer le comptage du temps d'arrêt automatique à partir de zéro conformément au signal d'instruction.

2. Appareil biométrique (100) selon la revendication 1, dans lequel, dans le cas où l'état de fonctionnement de l'appareil biométrique (100) est un état d'utilisation, la commande de l'état de fonctionnement par le contrôleur (29) consiste à convertir l'appareil biométrique (100) de l'état d'utilisation à un état de non utilisation après que le contrôleur (29) a déterminé que l'utilisateur n'est pas à proximité de l'appareil biométrique (100).

3. Appareil biométrique (100) selon la revendication 1, dans lequel, dans le cas où l'état de fonctionnement de l'appareil biométrique (100) est un état d'utilisation, la commande de l'état de fonctionnement par le contrôleur (29) consiste à limiter la conversion de l'appareil biométrique (100) de l'état d'utilisation à un état de non utilisation pendant que le contrôleur (29) détermine que l'utilisateur est à proximité de l'appareil biométrique (100) et à convertir l'appareil biométrique (100) de l'état d'utilisation à l'état de non utilisation après que le contrôleur (29) a déterminé que l'utilisateur n'est pas à proximité de l'appareil biométrique (100).

4. Appareil biométrique (100) selon l'une quelconque des revendications 1 à 3, dans lequel, dans le cas où l'état de fonctionnement de l'appareil biométrique (100) est un état d'utilisation, la commande de l'état de fonctionnement par le contrôleur (29) consiste à convertir l'appareil biométrique (100) de l'état d'utilisation à un état de non utilisation lorsque le contrôleur (29) détermine que l'utilisateur n'est pas à proximité de l'appareil biométrique (100) pendant une durée supérieure ou égale à une durée prédéterminée par le contrôleur (29).

5. Appareil biométrique (100) selon l'une quelconque des revendications 2 à 4, dans lequel l'état d'utilisation comporte au moins un d'un état dans un processus de réglage de l'appareil biométrique (100) par l'utilisateur, un état d'attente de mesure des informations biométriques de l'utilisateur par l'unité de mesure d'informations biométriques (29, 47, 48), un état dans un processus de mesure des informations biométriques de l'utilisateur par l'unité de mesure d'informations biométriques (29, 47, 48) et un état dans un processus d'affichage du résultat de mesure des informations biométriques.

6. Appareil biométrique (100) selon la revendication 1, dans lequel, dans le cas où l'état de fonctionnement de l'appareil biométrique (100) est un état de non utilisation, la commande de l'état de fonctionnement par le contrôleur (29) consiste à convertir l'appareil biométrique (100) de l'état de non utilisation à un état d'utilisation lorsque le contrôleur (29) détermine que l'utilisateur est à proximité de l'appareil biométriques (100).

7. Appareil biométrique (100) selon la revendication 1 ou 6, dans lequel l'unité de mesure d'informations biométriques (29, 47, 48) comporte une cellule de charge (47) fournissant en sortie un signal de charge fonction de la charge appliquée à l'appareil biométrique (100), et
le contrôleur (29) règle le signal de charge acquis par la cellule de charge (47) en tant que point zéro lorsque le contrôleur (29) détermine que l'utilisateur est à proximité de l'appareil biométrique (100).

8. Appareil biométrique (100) selon la revendication 1, dans lequel l'unité de mesure d'informations biométriques (29, 47, 48) comporte une cellule de charge (47) fournissant en sortie un signal de charge fonction de la charge appliquée à l'appareil biométrique (100), et
dans le cas où l'état de fonctionnement de l'appareil biométrique (100) est un état de non utilisation, la commande de l'état de fonctionnement par le contrôleur (29) consiste à convertir l'appareil biométrique (100) de l'état de non utilisation à un état d'utilisation lorsque le contrôleur (29) détermine que l'utilisateur est à proximité de l'appareil biométrique (100) et lorsque le contrôleur (29) détecte le fait que l'utilisateur monte sur l'appareil biométrique (100) en se basant sur le signal de charge acquis provenant de la cellule de charge (47).

9. Appareil biométrique (100) selon l'une quelconque des revendications 6 à 8, dans lequel le contrôleur (29) répète un processus d'acquisition du signal de capteur provenant du capteur (51) et détermine la proximité de l'utilisateur avec l'appareil biométrique (100) lorsque le temps écoulé pour la mesure du capteur (T1) mesuré par une unité de comptage du temps (52) atteint ou dépasse un temps de mesure de capteur (Ts).

10. Appareil biométrique (100) selon la revendication 8, dans lequel le contrôleur (29) répète un processus d'acquisition du signal de charge provenant de la cellule de charge (47) et détecte si l'utilisateur monte ou non sur l'appareil biométrique (100) lorsque le temps écoulé pour la détection de charge (T2) mesuré par une unité de comptage du temps (52) atteint ou dépasse un temps de détection de charge (Tw).

11. Appareil biométrique (100) selon la revendication 8, dans lequel, lorsque le temps écoulé pour la mesure du capteur (T1) mesuré par une unité de comptage du temps (52) atteint ou dépasse un temps de mesure de capteur (Ts) avant que le temps écoulé pour la détection de charge (T2) mesuré par l'unité de comptage du temps (52) atteigne ou dépasse un temps de détection de charge (Tw), le contrôleur (29) effectue l'acquisition du signal de capteur provenant du capteur (51), détermine la proximité de l'utilisateur avec l'appareil biométrique (100), effectue l'acquisition du signal de charge provenant de la cellule de charge (47) et détecte si l'utilisateur monte ou non sur l'appareil biométrique (100),
lorsque le temps écoulé pour la détection de charge (T2) mesuré par l'unité de comptage du temps (52) atteint ou dépasse le temps de détection de charge (Tw) avant que le temps écoulé pour la mesure du capteur (T1) mesuré par l'unité de comptage du temps (52) atteigne ou dépasse le temps de mesure de capteur (Ts), le contrôleur (29) effectue l'acquisition du signal de charge depuis la cellule de charge (47) et détecte si l'utilisateur monte ou non sur l'appareil biométrique (100), effectue l'acquisition du signal de capteur provenant du capteur (51) et détermine ensuite la proximité de l'utilisateur avec l'appareil biométrique (100).

12. Appareil biométrique (100) selon l'une quelconque des revendications 1 à 11, dans lequel le capteur (51) est un capteur de rayon infrarouge capable de détecter un rayon infrarouge et de fournir en sortie un signal de capteur, et
le contrôleur (29) détermine que l'utilisateur est à proximité de l'appareil biométrique (100) lorsque le signal de capteur provenant du capteur de rayon infrarouge est supérieur à une valeur de seuil prédéterminée.

13. Appareil biométrique (100) selon l'une quelconque des revendications 1 à 11, dans lequel le capteur (51) est un capteur d'éclairement et
le contrôleur (29) détermine que l'utilisateur est à proximité de l'appareil biométrique (100) lorsque la différence entre le signal de capteur acquis depuis le capteur d'éclairement au moment de la détermination de la proximité de ce temps et le signal de capteur acquis depuis le capteur d'éclairement au moment de la détermination de la proximité du temps précédent est supérieure à la valeur de seuil prédéterminée.
